# EUROPEAN PATENT SPECIFICATION

(11) **EP 1 191 267 B1**
(45) Date of publication and mention of the grant of the patent: **11.05.2005**
(21) Application number: 01203490.6
(22) Date of filing: 13.09.2001
(51) Int. Cl.: F16L 23/14, F24F 13/02

(54) **System and method for joining ducts**
System und Verfahren zur Verbindung Kanälen
Système et procédé pour joindre des conduits

(30) Priority: 21.09.2000 NL 1016236
(43) Date of publication of application: 27.03.2002
(73) Proprietor: De Waal Staal B.V., 5753 PM Deurne (NL)
(72) Inventor: Bijloo, Erik Andries, 5707 NK Helmond (NL)
(74) Representative: Van Someren, Petronella F. H. M.

(56) References cited:
- DE-A- 4 303 150
- FR-A- 2 732 443
- US-A- 4 252 350
- US-A- 5 564 758

## Description

The present invention relates to a system for joining ducts of a rectangular or square cross-section carrying gaseous medium, comprising:
- profiles arranged along the free end edges of a duct, wherein a profile comprises an end wall at right angles to the duct wall, a rear wall placed at a distance behind the end wall, an upper wall connecting the end wall and rear wall, a lower wall protruding from the end wall and a flange attachable to the duct wall;
- devices arranged between the profiles for connecting the profiles, which devices comprise corner parts, wherein a corner part comprises a body with legs, and each leg can slide between the upper wall and lower wall of a profile, this such that at least the mutually facing front sides of two opposite corner parts of the ducts for joining can be fixed to each other. The invention also relates to a method for mutually joining ducts of a rectangular or square cross-section carrying gaseous medium.

Devices of the above described type serve for gastight joining of ducts carrying gaseous medium, such as ventilation ducts etc. The ducts are fixed to each other using profiles which are arranged around the end edges of the ducts and mutually connected in the corners.

The profiles are placed in a square or rectangular arrangement by sliding four corner parts in the open outer ends of the profiles. The corner parts pushed into the profiles are then fixed to the profiles using spot welds, screw connections etc. The profiles arranged on the end edges of two ducts are subsequently placed against each other and the corner parts are connected together, so that a practically leakage-free coupling of the ducts is realized.

The known device has the drawback however that each corner part must be fixed separately to each profile by carrying out a number of time-consuming and expensive operations. Special tools are moreover required for these operations.

FR 2 732 443 A discloses a system for butt-joining ducts wherein corner elements are used which can be slide into profiles arranged along the free end edges of each duct in order to mutually connect the ducts. The corner elements include legs being provided with protrusions (saillies 28) caused by locally piercing the legs. The combined height of the protrusions and the legs is such that the combination of the leg and the protrusion occupy the height available between the upper end and lower wall of the profile. As a consequence, the corner elements are not clamped fixedly to the profiles and an additional fixing is needed.

It is an object of the present invention to obviate the above stated drawbacks and to provide a device and method with which the profiles can be fixed in simple and rapid manner, without this detracting from the sturdiness of the construction and without an additional fixing herein being necessary.

According to the invention this object is achieved in a device as claimed in claim 1 and a method as claimed in claim 16.

It is hereby no longer necessary to fix the corner part permanently to the profile parts by for instance additional spot welds, screw connections and the like. The use of special tools can moreover be dispensed with since the corner parts can be fixed in the profiles manually, or optionally assisted by a hammer. This results in a great time-saving in assembly of the system.

The clamping means comprise a resilient lip fixing the corner part in slide-out direction, which lip preferably forms a barb. The lip herein takes a form such that the slide-in force is significantly smaller than the slide-out force. It is hereby possible to slide a leg of the corner part into a profile without much difficulty, while sliding out is prevented. In other words, the force required to slide the leg into the profile is many times smaller than the force required to remove the leg of the corner part from the profile. In a particular preferred embodiment of the invention the resilient lip is of asymmetric form. The asymmetry of the lip herein provides the desired difference in slide-out force and slide-in force.

According to a further preferred embodiment a stop is formed between the body and each of the legs of a corner part so as to ensure a predetermined insertion depth of the corner part.

According to a further preferred embodiment the resilient lip is formed such that it protrudes with an overmeasure relative to the longitudinal direction of the leg. The part of the lip which protrudes relative to the leg herein functions as means for clamping in the inserted position the (substantially flat) lower edge of the leg against the corresponding upper surface of the lower wall of the profile. This provides a stable connection of the profiles. A further advantage hereof is that the play of the leg relative to the profile is decreased.

According to a further preferred embodiment the leg with the resilient lip comprises an angled end edge which preferably forms an angle of about 45° with the longitudinal direction of the leg. The angled edge increases the facility with which the leg can be pushed into the profile.

According to a further preferred embodiment recesses are arranged in the leg on either side of the lip. When the leg is pushed into the profile the bent aside part of the lip is received at least partially in a recess. This brings about a reduced play between the leg and the upper/lower wall of the profile.

Further advantages, features and details of the present invention will be elucidated on the basis of the description of the preferred embodiments thereof. Reference is made herein to the annexed figures, in which:
- figure 1 shows a view in perspective of two mutually connecting ducts which are joined using profiles and corner parts according to a preferred embodiment of the present invention;
- figure 2 shows a more detailed cut-away perspective view of a profile and a corner part as according to figure 1;
- figure 3 is a view of the preferred embodiment of a corner part of figure 2; and
- figure 4 is a view of the corner part of figure 3 in assembled state.

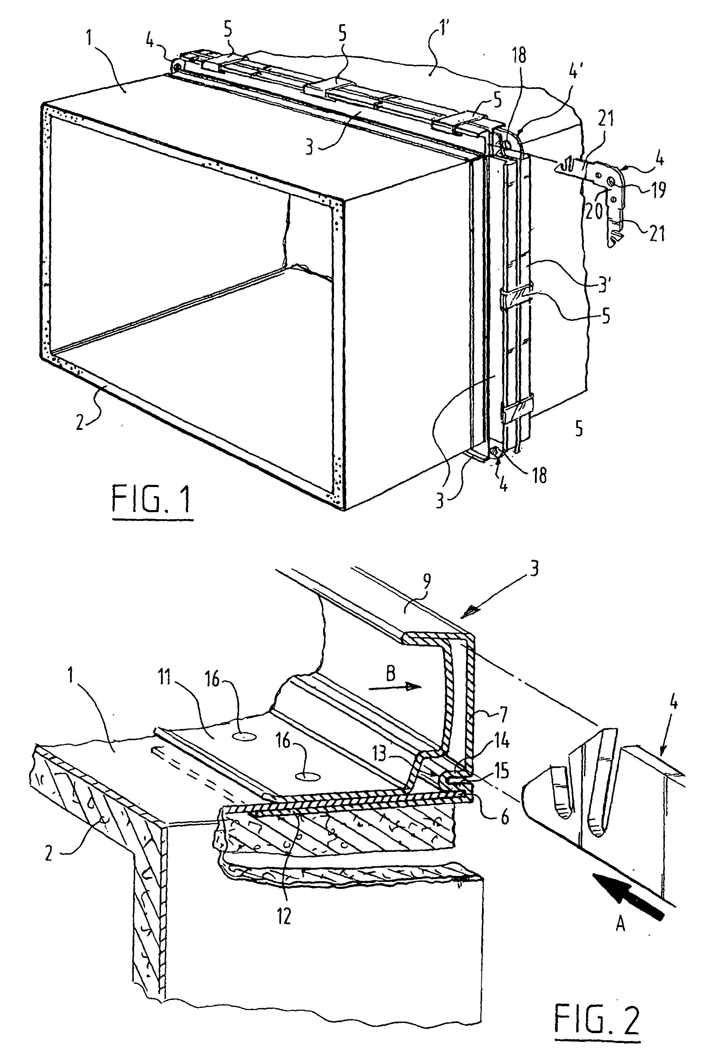

In figure 1 a ventilation duct part 1 of rectangular cross-section is joined to a ventilation duct part 1' of the same cross-section. The inner side of duct parts 1 and 1' are provided with insulating material 2. Duct parts 1 and 1' are butt-joined so that a smooth join is created on the inside of the duct. For the purpose of fixing the duct parts, profiles 3 and 3' respectively are pushed over the end edges thereof. Profiles 3 (and 3') are arranged at right angles to each other and coupled to each other using corner parts 4. Profile parts 3 and 3' are then placed with their front side against each other and corner parts 4 associated with profile parts 3 and corner parts 4' associated with profile parts 3' are fixed to each other. The corner parts are provided for this purpose with an opening 19 so that they can be fastened to each other using for instance a nut and bolt.

In order to ensure that profiles 3 and 3' are pressed firmly against each other (or against connecting strips (not shown) optionally arranged between profiles 3), locking profiles 5 are clamped over the shoulders of profiles 3 and 3'.

The profile 3 used is shown in more detail in figure 2. Profile 3 comprises an end wall 7, a rear wall 8, an upper wall 9 connecting end wall 7 and rear wall 8, a fold 13 comprising an upper wall 14 and a lower wall 15, and two flanges 11 and 12 between which is clamped the duct wall 6 of each duct 1. Upper flange 11 can optionally also be arranged on duct wall 1 with an additional fastening 16.

Shown on the right in figure 2 with arrow A is that a corner part 4 can be pushed into the open outer end formed by end wall 7, rear wall 8, upper wall 3 and lower wall 14.

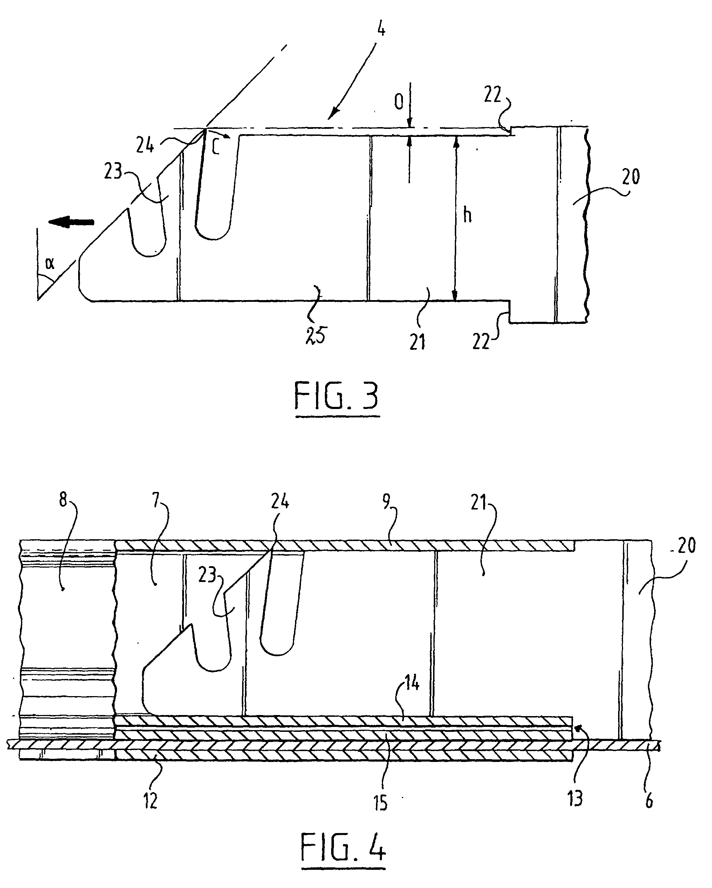

Figure 3 shows a detail view of a part of corner part 4. Corner part 4 comprises a body 20 on which two legs 21 are arranged at an angle of about 90°. In order to form a join of duct parts 1, first profile parts 3 (3') are fixed to each other by placing the legs 21 of corner parts 4 into the spaces of profiles 3 (3') formed between end walls 7, rear walls 8, upper walls 9 and lower walls 14. The assembly of profiles 3 coupled with corner parts 4 is then slid integrally over the end edges of a duct part 1, wherein walls 6 of duct parts 1 are clamped between flanges 11 and 12.

In figure 3 is shown that the leg 21 of corner part 4 is narrowed relative to the body 20 thereof, thereby creating a stop surface 22. Legs 21 of corner part 4 can be inserted in the direction of the arrow into profile 3 until the end edge of profile 3 rests against the stop 22, thereby ensuring that legs 21 of corner parts 4 are inserted far enough into the profile.

Each leg 21 of a corner part 4 is provided with a resilient lip 23, an outer end 24 of which protrudes beyond the longitudinal edge of leg 21. The distance over which lip 23 protrudes, i.e. the distance between the dash-dot line and the upper side of leg 21, is described as overmeasure.

When leg 21 is inserted into a profile 3, the resilient lip 23, and in particular the outer end 24 thereof, will be bent in the direction of arrow C. The user must herein overcome the resilient force of the lip during sliding-in. Once corner part 4 has been pushed into profile 3 as far as stop 22, leg 21 remains fixed between upper wall 9 and lower wall 14 of profile 3. For the purpose of sliding out, i.e. the movement in the direction opposite to that of the arrow, of leg 21 out of the profile, a force must be overcome which is many times greater than the above stated slide-in force. This is caused mainly by the asymmetric form of lip 23, and in particular the asymmetric form of the outer end 24 thereof. In practical applications the slide-out force required to slide out of a profile is many times greater than the slide-out force or manual force which can be exerted by a fitter without assist means. Thus is ensured that although sliding in can take place with little force, sliding out is (as good as) impossible, at least without the use of a special tool.

In figure 4 the corner part 4 is shown in the inserted situation. This figure shows clearly that, owing to the shown embodiment of lip 24 with a certain overmeasure, the lip pushes the lower edge 25 (i.e. that part of the leg between stop 22 and the lip end) integrally against lower wall 14. Lip 24 is herein fixedly clamped, this such that play of the leg 21 between upper wall 9 and lower wall 14 of profile 3 is avoided as far as possible. The dimensions and form of the leg, and particularly the form of said lower edge, are after all wholly adapted to those of profile 3. The height h of leg 21 of corner part 4 from the stop 22 to the resilient lip 23 is thus substantially constant and substantially equal to the distance between upper wall 9 and lower wall 14. Even in the case of an unevenness in the surface of lower wall 14 and/or upper wall 9, the corner part will still rest firmly in the profile due to the resilient force that is exerted. This provides a stable joining of the profiles.

The corner parts are otherwise embodied such that the outer ends 24 of the lips cause (practically) no permanent damage to the surface of upper wall 9. This means that when a corner part is removed from a profile using a special tool, this profile can be applied without problem with a subsequent corner part, and that the profile is thereby reusable.

Figure 3 shows that the outer end of a leg 21 is angled, preferably at an angle of 45°. This has the advantage that the leg can slide more readily between upper wall 9 and lower wall 14 of the profile.

Tests have demonstrated that the overmeasure of lip 23 relative to leg 21 must amount to between 0.2 and 0.8 mm, or must more preferably amount to 0.5 mm, in order on the one hand to make the slide-in force to be exerted by the user sufficiently small and on the other to make the slide-out force required for sliding out sufficiently great.

The shown embodiment of the corner part 4 can be manufactured in simple manner. Resilient lip 23 can for instance be manufactured by arranging in the material of leg 21 two recesses between which the lip 23 is formed. The overmeasure and stop 22 can for instance be provided by removing a portion of the leg on the side of the lip.

While the profile parts are generally manufactured from cold-rolled, sendzimir galvanized strip steel, the corner parts are preferably manufactured from steel C70 which has obtained required properties through a heat treatment. The corner parts can also be manufactured from steel 37 which has preferably undergone a carbonizing treatment. The final corner part then has a hardness of 98-91 R15N.

The present invention is not limited to the above described preferred embodiments thereof; the rights sought are defined by the following claims, within the scope of which many modifications can be envisaged.

## Claims

1. System for butt-joining ducts of a rectangular or square cross-section carrying gaseous medium, comprising:
- profiles (3,3') arranged along the free end edges of a duct, wherein a profile comprises an end wall (7) at right angles to the duct wall, a rear wall (8) placed at a distance behind the end wall, an upper wall (9) connecting the end wall and rear wall, a lower wall (14) protruding from the end wall and a flange attachable to the duct wall;
- device to be arranged between said profiles (3,3') for connecting the profiles, the devices comprising corner parts (4,4'), wherein a corner part comprises a body with legs, and each leg can slide between the upper wall and lower wall of a profile, this such that at least the mutually facing front sides of two opposite corner parts of the ducts for joining can be fixed to each other, the legs comprising clamping means (23) for clamping the corner part to the profile wherein the clamping means of the legs comprise a lip (23);
**characterized in that**
the lip (23) is a resilient lip taking a form such that the corner part can be fixedly clamped to the profile and the slide-in force is significantly smaller than the slide-out force.

2. System as claimed in claim 1, wherein the resilient lip is of asymmetric form.

3. System as claimed in claim 1 or 2, wherein recesses are arranged in the leg on either side of the lip (23).

4. System as claimed in any of claims 1-3, wherein the resilient lip protrudes with an overmeasure (o) relative to the leg.

5. System as claimed in claim 4, wherein the overmeasure (o) amounts to between 0.2 and 0.8 mm.

6. System as claimed in claim 4 or 5, wherein the overmeasure (o) amounts to about 0.5 mm.

7. System as claimed in any of claims 1-6, wherein the lower edge of the leg opposite the lip is substantially flat for the purpose of clamping the lower edge (25) against the upper surface of the lower wall (14) in the pushed-in situation.

8. System as claimed in any of the claims 1-7, wherein a stop (22) is formed between the body and a leg of a corner part.

9. System as claimed in claim 8, wherein the stop is formed by a narrowed portion of the leg relative to the body of the corner part.

10. System as claimed in claim 8 or 9, wherein the height (h) of the leg between the stop (22) and the resilient lip (23) is substantially constant.

11. System as claimed in claim 10, wherein said height (h) is substantially equal to the distance between upper wall (9) and lower wall (14).

12. System as claimed in any of the foregoing claims, wherein the leg with resilient lip comprises an angled end edge.

13. System as claimed in claim 12, wherein the angled end edge forms an angle of about 45° with the longitudinal direction of the leg.

14. System as claimed in any of the foregoing claims, wherein the profiles are manufactured from sendzimir galvanized strip steel.

15. System as claimed in any of the foregoing claims, wherein a corner part is manufactured from carbonised steel.

16. Method for butt-joining ducts of a rectangular or square cross-section carrying gaseous medium, comprising of:
- arranging profiles (3,3') along each of the free end edges of two ducts to be fixed to each other, wherein a profile comprises an end wall (7) at right angles to the duct wall, a rear wall (8) placed at a distance behind the end wall, an upper wall (9) connecting the end wall and rear wall, a lower wall (14) protruding from the end wall and a flange to be attached to the duct wall;
- connecting the profiles by arranging devices comprising hook-shaped corner parts (4,4') between the profiles, sliding the corner parts in a slide-in direction between the upper wall and lower wall, placing against each other at least the mutually facing front sides of two opposite corner parts and fixing the corner parts to each other,
**characterized by**
sliding the corner parts, which are provided with resilient lips (23) taking a form such that the slide-in force is significantly smaller than the slide-out force, between the upper wall and lower wall of the profiles so as to fixedly clamp the corner parts in the slide-out direction only.

17. Method according to claim 16, wherein the system as defined in any of the claims 1-15 is applied.

## Patentansprüche

1. System zum Verbinden von Kanälen mit einem rechteckigen oder eckigen Querschnitt, die ein gasförmiges Medium führen, mit einer Stoßverbindung, mit:
- entlang den freien Endrändern eines Kanals angeordneten Profilen (3, 3'), wobei ein Profil eine Endwand (7) in rechten Winkeln zu der Kanalwand, eine in einem Abstand hinter der Endwand angeordnete Rückwand (8), eine die Endwand und die Rückwand verbindende obere Wand (9), eine von der Endwand hervorstehende untere Wand (14) und einen an die Kanalwand aufsetzbaren Flansch umfaßt;
- zwischen die Profile (3, 3') anzuordnende Vorrichtung zum Verbinden der Profile, wobei die Vorrichtungen Eckteile (4, 4') umfassen, wobei ein Eckteil einen Körper mit Schenkeln umfaßt und jeder Schenkel zwischen der oberen Wand und der unteren Wand eines Profils derart verrutscht werden kann, daß zumindest die sich gegenüberliegenden Vorderseiten der zwei entgegengesetzten Eckteile der Kanäle zum Verbinden aneinander befestigt werden können, wobei die Schenkel ein Klemmittel (23) zum Klemmen des Eckteils an das Profil umfassen,
wobei das Klemmittel der Schenkel eine Lippe (23) umfaßt; **dadurch gekennzeichnet, daß**
die Lippe (23) eine elastische Lippe ist, die eine Form derart annimmt, daß das Eckteil fest an das Profil geklemmt werden kann und die Einschiebkraft wesentlich geringer ist als die Herausrutschkraft.

2. System nach Anspruch 1, wobei die elastische Lippe von asymmetrischer Form ist.

3. System nach Anspruch 1 oder 2, wobei Aussparungen in dem Schenkel auf beiden Seiten der Lippe (23) angeordnet sind.

4. System nach einem der Ansprüche 1 bis 3, wobei die elastische Lippe mit einem Übermaß (o) relativ zu dem Schenkel hervorsteht.

5. System nach Anspruch 4, wobei das Übermaß (o) zwischen 0,2 und 0,8 mm beträgt.

6. System nach Anspruch 4 oder 5, wobei das Übermaß (o) etwa 0,5 mm beträgt.

7. System nach einem der Ansprüche 1 bis 6, wobei der untere Rand des Schenkels gegenüber der Lippe im wesentlichen flach ist zum Zwecke des Klemmens des unteren Rands (25) gegen die obere Oberfläche der unteren Wand (14) in dem eingeschobenen Zustand.

8. System nach einem der Ansprüche 1 bis 7, wobei ein Anschlag (22) zwischen dem Körper und einem Schenkel eines Eckteils ausgebildet ist.

9. System nach Anspruch 8, wobei der Anschlag durch einen verengten Abschnitt des Schenkels relativ zu dem Körper des Eckteils gebildet ist.

10. System nach Anspruch 8 oder 9, wobei die Höhe (h) des Schenkels zwischen dem Anschlag (22) und der elastischen Lippe (23) im wesentlichen konstant ist.

11. System nach Anspruch 10, wobei die Höhe (h) im wesentlichen gleich ist zu dem Abstand zwischen der oberen Wand (9) und der unteren Wand (14).

12. System nach einem der vorhergehenden Ansprüche, wobei der Schenkel mit der elastischen Lippe einen abgewinkelten Endrand umfaßt.

13. System nach Anspruch 12, wobei der abgewinkelte Endrand einen Winkel von etwa 45° mit der Längsrichtung des Schenkels bildet.

14. System nach einem der vorhergehenden Ansprüche, wobei die Profile aus nach dem Sendzimir-Verfahren galvanisiertem Bandstahl hergestellt sind.

15. System nach einem der vorhergehenden Ansprüche, wobei ein Eckteil aus karbonisiertem Stahl hergestellt ist.

16. Verfahren zum Verbinden von Kanälen mit einem rechteckigen oder quadratischen Querschnitt, die ein gasförmiges Medium führen, mit einer Stoßverbindung, welches umfaßt:
- Anordnen von Profilen (3, 3') entlang jedes der freien Endränder der zwei aneinander zu befestigenden Kanäle, wobei ein Profil eine Endwand (7) in rechten Winkeln zu der Kanalwand, eine in einem Abstand hinter der Endwand angeordnete Rückwand (8), eine die Endwand und die Rückwand verbindende obere Wand (9), eine von der Endwand hervorstehende untere Wand (14) und einen an der Kanalwand zu befestigenden Flansch umfaßt;
- Verbinden der Profile durch Anordnen von Vorrichtungen, welche hakenförmige Eckteile (4, 4') umfassen, zwischen den Profilen, Schieben der Eckteile in einer Einschiebrichtung zwischen die obere Wand und die untere Wand, gegeneinander Anordnen von zumindest den gegenüberliegenden Vorderseiten der zwei entgegengesetzten Eckteile und Befestigen der Eckteile aneinander,
**gekennzeichnet durch**
Schieben der Eckteile, die mit elastischen Lippen (23) versehen sind, welche eine Form derart annehmen, daß die Einschiebkraft wesentlich geringer ist als die Herausrutschkraft, zwischen die obere Wand und die untere Wand der Profile, so daß die Eckteile nur in der Herausrutschrichtung festgeklemmt werden.

17. Verfahren nach Anspruch 16, wobei das System nach einem der Ansprüche 1 bis 15 verwendet wird.

## Revendications

1. Système pour aboucher des conduits de section transversale rectangulaire ou carrée, transportant un milieu gazeux, comprenant :
- des profils (3, 3') agencés le long des bords d'extrémité libres d'un conduit, dans lequel un profil comprend une paroi d'extrémité (7) à angle droit par rapport à la paroi de conduit, une paroi arrière (8) placée à une certaine distance derrière la paroi d'extrémité, une paroi supérieure (9) raccordant la paroi d'extrémité et la paroi arrière, une paroi inférieure (14) faisant saillie à partir de la paroi d'extrémité et une bride pouvant être rattachée à la paroi de conduit ;
- des dispositifs à agencer entre lesdits profils (3, 3') pour raccorder les profils, les dispositifs comprenant des parties d'angle (4, 4') dans lesquels une partie d'angle comprend un corps avec des branches, et chaque branche peut coulisser entre la paroi supérieure et la paroi inférieure d'un profil, de telle sorte qu'au moins les côtés avant se faisant face mutuellement de deux parties d'angle opposées des conduits pour la jonction peuvent être fixés l'un à l'autre, les branches comprenant des moyens de serrage (23) pour serrer la partie d'angle sur le profil, dans lequel les moyens de serrage des branches comprennent une languette (23) ;
**caractérisé en ce que** la languette (23) est une languette élastique adoptant une forme telle que la partie d'angle peut être serrée solidement sur le profil et la force de coulissement d'entrée est nettement inférieure à la force de coulissement de sortie.

2. Système selon la revendication 1, dans lequel la languette élastique est de forme asymétrique.

3. Système selon la revendication 1 ou 2, dans lequel des encoches sont agencées dans la branche de chaque côté de la languette (23).

4. Système selon l'une quelconque des revendications 1 à 3, dans lequel la languette élastique fait saillie avec une surcote (o) par rapport à la branche.

5. Système selon la revendication 4, dans lequel la surcote (o) mesure entre 0,2 à 0,8 mm.

6. Système selon la revendication 4 ou 5, dans lequel la surcote (o) mesure environ 0,5 mm.

7. Système selon l'une quelconque des revendications 1 à 6, dans lequel le bord inférieur de la branche opposée à la languette est sensiblement plate dans le but de serrer le bord inférieur (25) contre la surface supérieure de la paroi inférieure (14) à l'état rentré.

8. Système selon l'une quelconque des revendications 1 à 7, dans lequel une butée (22) est formée entre le corps et une branche d'une partie d'angle.

9. Système selon la revendication 8, dans lequel la butée est formée par une partie rétrécie de la branche par rapport au corps de la partie d'angle.

10. Système selon la revendication 8 ou 9, dans lequel la hauteur (h) de la branche entre la butée (22) et la languette élastique (23) est sensiblement constante.

11. Système selon la revendication 10, dans lequel ladite hauteur (h) est sensiblement égale à la distance entre la paroi supérieure (9) et la paroi inférieure (14).

12. Système selon l'une quelconque des revendications précédentes, dans lequel la branche avec la languette élastique comprend un bord d'extrémité coudé.

13. Système selon la revendication 12, dans lequel le bord d'extrémité coudé forme un angle d'environ 45° avec la direction longitudinale de la branche.

14. Système selon l'une quelconque des revendications précédentes, dans lequel les profils sont fabriqués à partir d'acier en bande galvanisé Sendzimir.

15. Système selon l'une quelconque des revendications précédentes, dans lequel une partie d'angle est fabriquée à partir d'acier cémenté.

16. Procédé d'abouchement de conduits de section transversale rectangulaire ou carrée, transportant un milieu gazeux, comprenant les étapes consistant à ;
- agencer des profils (3, 3') le long de chacun des bords d'extrémité libres de deux conduits à fixer l'un à l'autre, dans lequel un profil comprend une paroi d'extrémité (7) à angle droit par rapport à la paroi de conduit, une paroi arrière (8) placée à une certaine distance derrière la paroi d'extrémité, une paroi supérieure (9) raccordant la paroi d'extrémité et la paroi arrière, une paroi inférieure (14) faisant saillie à partir de la paroi d'extrémité et une bride à rattacher à la paroi de conduit ;
- raccorder les profils en agencant des dispositifs comprenant des parties d'angle (4, 4') en forme de crochet entre les profils, faire coulisser les parties d'angle dans une direction de coulissement d'entrée entre la paroi supérieure et la paroi inférieure, placer l'un contre l'autre au moins les côtés avant se faisant face mutuellement de deux parties d'angle opposées et fixer les parties d'angle l'une à l'autre ;
**caractérisé par** l'étape consistant à
faire coulisser les parties d'angle, qui sont munies de languettes élastiques (23), adoptant une forme telle que la force de coulissement d'entrée est nettement inférieure à la force de coulissement de sortie, entre la paroi supérieure et la paroi inférieure des profils de façon à serrer solidement les parties d'angle dans la direction de coulissement de sortie seulement.

17. Procédé selon la revendication 16, dans lequel le système selon l'une quelconque des revendications 1 à 15 est appliqué.
